# EUROPÄISCHE PATENTANMELDUNG

(11) **EP 4 781 879 A1**
(43) Veröffentlichungstag der Anmeldung: **29.07.2026**
(21) Anmeldenummer: 25154446.6
(22) Anmeldetag: 28.01.2025
(51) Int. Cl.: A47J 47/10

(54) **FRISCHHALTEDOSE MIT ABNEHMBAREM DECKEL**

(71) Anmelder: Rotho Kunststoff AG, 5303 Würenlingen (CH)
(72) Erfinder: Meier, Bruno, 5417 Untersiggenthal (CH)
(74) Vertreter: LBP Lemcke, Brommer & Partner Patentanwälte mbB

(57) **Zusammenfassung**

Die Erfindung betrifft eine Frischhaltedose mit abnehmbarem Deckel. Diese Frischhaltedose umfasst eine Schale 1 mit einem oben umlaufenden, eine horizontale Deckelebene definierenden Schalenrand 5, einen Deckel 2, der abnehmbar auf der Schale 1 sitzt und hierzu mit einem Deckelrand 9 auf dem Schalenrand 5 aufliegt, sowie einen weichelastischen Dichtungsring 20, der den aufgesetzten Deckel 2 im Bereich des Schalenrandes 5 gegen einen Innenraum der Schale 1 abdichtet. Der Deckel 2 weist eine umlaufende Nut 21 zur Aufnahme des Dichtungsrings 20 auf, wobei diese Nut 21 zwischen dem Deckelrand 9 und einer sich vom Deckelrand 9 nach unten in den Innenraum der Schale 1 erstreckenden Nutwand 23 gebildet ist. Die Nut 21 öffnet sich nach außen in Richtungen, die von einem Innenbereich 10 des Deckels 2 abgewandt sind und im Wesentlichen in der Deckelebene oder einer zu dieser parallelen Ebene liegen.

## Beschreibung

Die Erfindung betrifft eine Frischhaltedose mit abnehmbarem Deckel, die vorzugsweise aus spritzgegossenem Kunststoff besteht, nach dem Oberbegriff des Anspruchs 1.

Eine solche Frischhaltedose umfasst eine Schale mit einem oben umlaufenden Schalenrand, einen Deckel, der abnehmbar auf der Schale sitzt und hierzu mit einem Deckelrand direkt oder indirekt umlaufend auf dem Schalenrand aufliegt, sowie einen weichelastischen Dichtungsring, der den aufgesetzten Deckel im Bereich des Schalenrandes gegen einen Innenraum der Schale abdichtet. Hierfür weist der Deckel eine umlaufende Nut zur Aufnahme des Dichtungsrings auf, die im Bereich eines Außenumfangs des Deckels angeordnet ist. Der Schalenrand einer solchen Frischhaltedose definiert eine horizontale Deckelebene, so dass der Dichtungsring in einer Ebene angeordnet werden kann, die zur Deckelebene parallel verläuft oder die Deckelebene ist.

Vor allem dann, wenn eine Frischhaltedose der vorliegenden Art für die Aufbewahrung und den Transport von Lebensmitteln dienen soll, ist es unerlässlich, dass der Deckel der Frischhaltedose möglichst dicht schließt, um das Heraustropfen von Flüssigkeiten, aber auch einen Luftaustausch zwischen dem Behälterinneren und der Umgebung auszuschließen. Hierfür ist es bekannt, im Kontaktbereich zwischen dem Deckel und dem Schalenrand eine weichelastische Dichtung einzusetzen, um den luft- und tropfdichten Sitz des Deckels auf der Schale zu gewährleisten.

Um insbesondere bei größeren Behältern mit einem Volumen von beispielsweise einem Liter und mehr einen tatsächlich luftdichten Sitz des Deckels auf dem Schalenrand zu gewährleisten ist, es unabdingbar, dass eine permanente Anpresskraft zwischen dem Deckel und dem Schalenrand aufrechterhalten wird. Hierzu ist es bereits bekannt, am Deckel separat betätigbare Befestigungselemente in Form von schwenkbaren Klappen vorzusehen, die korrespondierende Vorsprünge an der Außenseite der Schale klemmend untergreifen und hierbei den Deckel gegen den Schalenrand pressen, wodurch die weichelastische Dichtung im Kontaktbereich zwischen dem Deckel und dem Schalenrand zusammengepresst wird. Bei rechteckig geformten bzw. quaderförmigen Behältern besteht allerdings die Schwierigkeit, dass die Seitenwandung der Schale jedenfalls an den längeren Seiten dieser Anpresskraft zwischen dem Deckel und dem Schalenrand ausweicht, da ein Behälter der vorliegenden Art aus Gewichts- und Kostengründen in aller Regel dünnwandig ausgebildet ist und die Stabilität der Seitenwandung insofern nicht immer ausreicht, um die zur Luftdichtheit erforderliche Gegenkraft gegen die Anpresskraft am Schalenrand aufzubringen. Dementsprechend ist es bei solchen Behältern notwenig, an allen vier Seiten Befestigungselemente vorzusehen, die den Deckel auf den Schalenrand pressen.

In der EP-A-1 780 140, die eine Frischhaltedose der eingangs genannten Art zum Gegenstand hat, ist daher vorgeschlagen worden, eine Frischhaltedose der eingangs genannten Art mit einem Schieber zu versehen, der an zumindest zwei gegenüberliegenden Seiten der Frischhaltedose eine Haltenut ausbildet, die im Querschnitt C-förmig ausgebildet ist und zum gleichzeitigen Übergreifen des Deckelrands und Untergreifen einer Auskragung im Bereich des Schalenrands vorgesehen ist, um den Deckelrand auf dem Schalenrand zu halten und den Deckel gegen eine elastische Rückstellkraft des Dichtungsrings gegen den Schalenrand zu drücken.

Nicht nur nach diesem Stand der Technik ist es üblich, den Dichtungsring in eine sich nach unten öffnende Nut im Deckel, im Bereich des Deckelrands einzusetzen, welche Nut an sich dazu vorgesehen ist, den Schalenrand beim Aufsetzen des Deckels in sich aufzunehmen. Daher presst der Schalenrand beim Aufsetzen des Deckels den Dichtungsring weiter in die Nut hinein. Aufgrund dessen Weichelastizität ergibt sich nicht nur eine Dichtwirkung zwischen dem Schalenrand und dem Dichtungsring, sondern auch zwischen dem Dichtungsring und dem Inneren der Nut, mithin dem Deckel.

Verbesserungsbedarf gibt es bei dieser üblichen Anordnung des Dichtungsrings und der Nut zur Aufnahme des Dichtungsrings dann, wenn der Dichtungsring zu Reinigungszwecken aus der Nut entnommen wird. Die weichelastischen Eigenschaften des Dichtungsrings machen es schwer, diesen wieder in die umlaufende Nut im Deckel einzusetzen, denn der Dichtungsring muss hierzu etwas gestreckt werden und springt hierbei gern auf einer Seite des Deckels, wo er bereits in die Nut eingesetzt ist, wieder aus der Nut heraus, wenn er an der gegenüberliegenden Seite des Deckels in die Nut eingesetzt wird.

Der Erfindung liegt daher die Aufgabe zugrunde, eine Frischhaltedose der eingangs genannten Art hinsichtlich ihrer Handhabbarkeit, insbesondere beim Einsetzen des Dichtungsrings in die dafür vorgesehene Nut im Deckel der Frischhaltedose zu verbessern.

Gelöst ist diese Aufgabe durch eine Frischhaltedose mit den Merkmalen des Anspruchs 1. Vorteilhafte Ausgestaltungen und Weiterbildungen der erfindungsgemäßen Frischhaltedose sind in den Ansprüchen 2 bis 15 niedergelegt.

Erfindungsgemäß ist bei einer Frischhaltedose der eingangs genannten Art die Nut zur Aufnahme des Dichtungsrings demnach so orientiert, dass sie sich nicht mehr, wie im Stand der Technik, vertikal nach unten öffnet, sondern horizontal nach außen, d.h. die Nut öffnet sich in diejenigen Raumrichtungen, die von einem Innenbereich des Deckels abgewandt sind und im Wesentlichen in der horizontalen Deckelebene oder einer zu dieser parallelen Ebene liegen. Um den Deckel gegen die Schale abdichten zu können, wird die Nut erfindungsgemäß einerseits vom Deckelrand (oder jedenfalls vom Deckel im Bereich des Deckelrands) und andererseits von einer sich vom Deckelrand (oder jedenfalls vom Deckel im Bereich des Deckelrands) nach unten in den Innenraum der Schale erstreckenden Nutwand gebildet. Wenn der Deckelrand auf dem Schalenrand aufliegt, kommt so der in der Nut angeordnete Dichtungsring unterhalb des Deckelrands oder im Bereich des Deckelrands an der Innenwandung der Schalung zu liegen, so dass er den Kontaktbereich zwischen dem Deckel und der Schale an dieser Stelle abdichten kann.

Da sich die Nut zur Aufnahme des Dichtungsrings erfindungsgemäß, vom Innenbereich des Deckels aus gesehen, horizontal nach außen öffnet, kann der Dichtungsring sehr einfach in die Nut eingesetzt werden, indem er auf einer Seite des Deckels in die Nut eingelegt, leicht gestreckt und so rundum in die gesamte Nut eingesetzt werden kann, ohne dass die Gefahr besteht, dass der Dichtungsring auf der gegenüberliegenden Seite wieder aus der Nut herausspringt. Denn die elastische Rückstellkraft des Dichtungsrings beim Strecken desselben drückt den Dichtungsring an denjenigen Stellen, in denen er bereits in die Nut eingesetzt ist, nur noch weiter in die Nut hinein.

Die Nut zur Aufnahme des Dichtungsrings kann als Rundnut, und der Dichtungsring kann als O-Ring ausgeformt sein; die vorliegende Erfindung ist hierauf jedoch nicht eingeschränkt, auch wenn eine O-Ring-Dichtung sehr kostengünstig zu fertigen ist.

Der Schalenrand der erfindungsgemäßen Frischhaltedose kann, wie an sich bekannt, mit einer umlaufenden Auskragung versehen sein, die vorzugsweise oberseitig eine Auflagefläche für den Deckelrand bildet, und ansonsten zur Stabilisierung des Schalenrands dient. Um den Schalenrand noch stabiler auszugestalten, kann die Auskragung an ihrem äußeren Endbereich außerdem mit einer umlaufenden Abkantung versehen sein.

Wenn der Schalenrand mit einer Auskragung versehen ist und insbesondere diese Auskragung eine Auflagefläche für den Deckelrand bildet, ist es im Rahmen der vorliegenden Erfindung bevorzugt, wenn ein Schieberahmen zum horizontalen Aufschieben auf den Deckelrand vorhanden ist. Dieser Schieberahmen bildet dann zumindest an zwei gegenüberliegenden Seiten der Frischhaltedose eine Haltenut aus, die im Querschnitt C-förmig ausgebildet ist und zum gleichzeitigen Übergreifen des Deckelrands und Untergreifen der Auskragung am Schalenrand vorgesehen ist, um den Deckelrand auf dem Schalenrand zu halten und diesen auch gegen eine elastische Rückstellkraft des Dichtungsrings permanent gegen den Schalenrand zu pressen.

Ein solcher Schieberahmen erhöht die Stabilität der Schale und des Deckels im Kontaktbereich dieser beiden Teile der Frischhaltedose nochmals deutlich und sorgt so, neben der bevorzugt permanent bestehenden Anpresskraft auf den Dichtungsring, für eine zuverlässige Abdichtung der Frischhaltedose und einen dichten Sitz des mit dem Dichtungsring versehenen Deckels auf der Schale.

Die C-förmige Haltenut des bevorzugt vorhandenen Schieberahmens ist weiter bevorzugt mit Einführschrägen zum gleichzeitigen Einfädeln von Deckelrand und Auskragung versehen, während sie hinter diesen Einführschrägen dann solcherart geformt und dimensioniert ist, dass sie den mit Dichtungsring auf die Schale aufgesetzten Deckel gegen eine elastische Rückstellkraft des Dichtungsrings auf die Schale aufpresst.

Wenn die erfindungsgemäße Frischhaltedose mit einem Schieberahmen ausgestattet ist, bietet es besondere Vorteile, wenn die Schale eine rechteckige Grundform aufweist und der Schieberahmen ebenfalls eine rechteckige Grundform aufweist. Letzterer kann dann an drei Seiten der rechteckigen Grundform mit einer Haltenut versehen sein, so dass letztendlich nur eine (Stirn-)Seite der Frischhaltedose nicht durch den Schieberahmen direkt dicht gehalten wird, sondern lediglich indirekt durch die Stabilität der Auskragung des Schalenrands und des Deckelrands.

Gerade bei einer rechteckigen Grundform ist es an sich bekannt, dass der Deckel der Frischhaltedose an einer Ecke der rechteckigen Grundform mit einer über die Auskragung des Schalenrandes überstehenden Grifflasche versehen sein kann, so dass der Deckel trotz der Auskragung am Schalenrand leicht ergriffen und vom Schalenrand abgezogen werden kann. Um hierbei zu vermeiden, dass die Grifflasche das Aufschieben des Schieberahmens behindert, ist der Schieberahmen in mindestens einer seiner Ecken vorzugsweise mit Schlitzen zur Aufnahme der Grifflasche versehen. Hierdurch ist insbesondere auch gewährleistet, dass der Schieberahmen von zwei Seiten bzw., bei einer quadratischen Grundform der Frischhaltedose, von allen vier Seiten aufgeschoben werden kann, unabhängig davon, an welcher Ecke oder an welchen mehreren Ecken des Deckels die Grifflasche angeordnet ist.

Unabhängig von der Grundform der Frischhaltedose - in der Regel rund oder rechteckig - bildet der Schieberahmen weiter bevorzugt einen vollständigen Ring aus, der der Grundform der Schale angepasst ist, also beispielsweise auch rund oder rechteckig. Der Schieberahmen ist dann mit einem Anschlag versehen, der eine Aufschiebebewegung auf den Deckelrand begrenzt: Wenn der Anschlag gegen den Deckel und/oder die Auskragung am Schalenrand anschlägt, ist der Schieberahmen vollständig aufgeschoben. Dieser Anschlag wird zweckmäßigerweise durch die Haltenut gebildet, die auch an dieser Stelle den Deckelrand übergreift und die Auskragung des Schalenrands untergreift. Ein Riegelelement, das auf dem Schieberahmen dem voranstehend erwähnten Anschlag im Wesentlichen gegenüberliegt, kann zum Verriegeln des Schiebenrahmens in seiner aufgeschobenen Stellung vorgesehen sein. Der Schieberahmen sitzt dann also einerseits durch den Anschlag und andererseits durch das Riegelelement gesichert auf dem Deckel und der Schale der Frischhaltedose.

Das Riegelelement kann als Klappe ausgebildet sein, die schwenkbar am Schieberahmen befestigt ist und an bzw. unter der Auskragung am Schalenrand eingerastet werden kann. Eine solche Ausbildung des Riegelelements ermöglicht außerdem, den Deckelrand gegen die elastische Rückstellkraft des Dichtungsrings permanent gegen die Schale zu pressen, wie dies bei Frischhaltedosen mit schwenkbaren Klappen am Deckel, die an der Schale verrastet werden, an sich bereits bekannt ist. Diese zusätzliche Anpresskraft, die von dem als schwenkbare Klappe ausgebildeten Riegelelement erzeugt wird, ergänzt die Anpresskraft durch die Haltenut des Schieberahmens besonders vorteilhaft an einer Stelle, an der der Schieberahmen keine Haltenut aufweisen kann, um auf die Frischhaltedose geschoben werden zu können.

Um die erfindungsgemäße Frischhaltedose auch in einem Mikrowellenofen verwenden zu können, ist es bevorzugt, wenn im Deckel ein Ventil zum Ausgleich eines Überdrucks im Innenraum der Schale angeordnet ist, der beim Erhitzen des Inhalts der Frischhaltedose in einer Mikrowelle entstehen kann. Dies stellt sicher, dass die Frischhaltedose trotz Ventil bei einem Transport tropfdicht verschlossen ist. Wenn die erfindungsgemäße Frischhaltedose mit einem Schieberahmen ausgestattet ist, der ein als Klappe ausgebildetes Riegelelement trägt, kann ein solches Ventil auch unterhalb der Klappe angeordnet und das Ventil durch die Klappe verschließbar sein. Ansonsten ist das Ventil bevorzugt im Innenbereich des Deckels in diesen integriert.

Die erfindungsgemäße Frischhaltedose besteht besonders bevorzugt aus spritzgegossenem Kunststoff. Hierbei ist es bevorzugt, wenn der Deckel der Frischhaltedose solcherart in Zwei-Komponenten-Spritzgusstechnik hergestellt ist, dass zumindest der Deckelrand aus einem durchgefärbten Kunststoff besteht, während der Innenbereich des Deckels aus einem transparenten und/oder transluzenten und/oder opaken Kunststoff gefertigt ist. Es ist aber auch beispielsweise möglich, die Schale - oder auch andere Teile - der Frischhaltedose aus Glas oder aus Metall zu fertigen; die vorliegende Erfindung ist von den verwendeten Materialien unabhängig.

Ein Ausführungsbeispiel einer erfindungsgemäßen Frischhaltedose ist in den beiliegenden

Zeichnungen dargestellt und nachfolgend beschrieben. Dieses Ausführungsbeispiel ist exemplarisch zu verstehen, d.h. es schränkt den Umfang und die Reichweite der vorliegenden Erfindung nicht ein. Gleichwohl können sich aus den Zeichnungen und der nachfolgenden beispielhaften Beschreibung erfindungswesentliche Merkmale entnehmen lassen.

Es zeigen:
- Figur 1: eine schematische isometrische Darstellung einer erfindungsgemäß ausgestalteten Frischhaltedose;
- Figur 2: die Schale der Frischhaltedose aus Figur 1;
- Figur 3: den Deckel der Frischhaltedose aus Figur 1;
- Figur 4: den Schieberahmen der Frischhaltedose aus Figur 1;
- Figur 5: den Dichtungsring der Frischhaltedose aus Figur 1;
- Figur 6: eine geschnittene Teildarstellung einer Seite der Frischhaltedose aus Figur 1;
- Figur 7: eine geschnittenen Teildarstellung der anderen Seite der Frischhaltedose aus Figur 1.

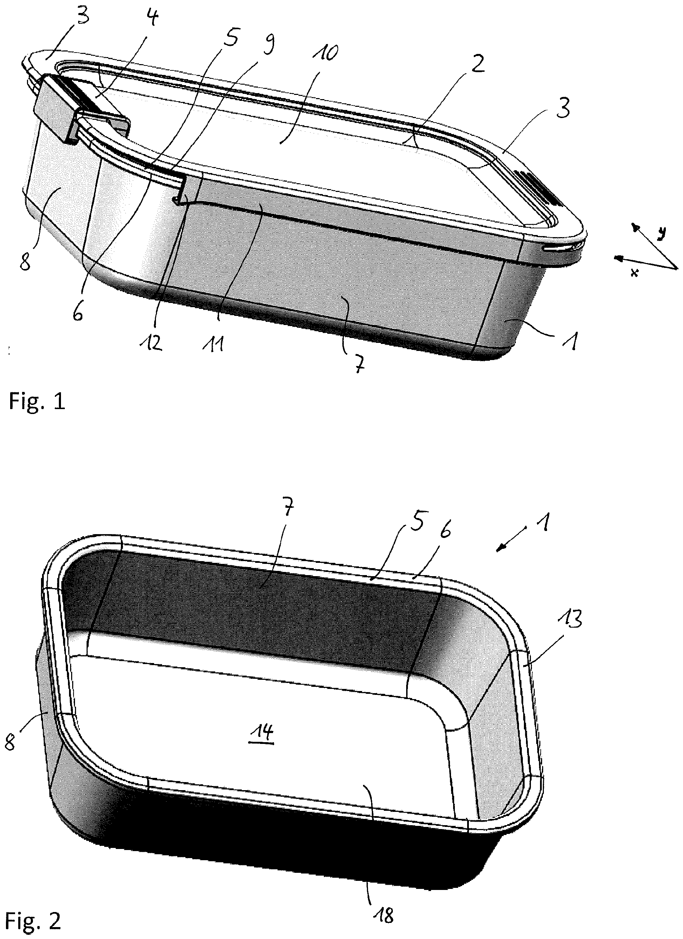

In Figur 1 wird in schematischer, isometrischer Darstellung eine Frischhaltedose gezeigt, im Wesentlichen bestehend aus einer Schale 1, einem Deckel 2, einem Schieberahmen 3 zum Halten des Deckels 2 auf der Schale 1 und einem Riegelelement 4 zum Sichern des Schieberahmens 3 in seiner dargestellten, aufgeschobenen Position. Diese Teile sind sämtlich im Spritzgussverfahren hergestellt worden.

Ein oben umlaufender Schalenrand 5 definiert eine horizontale Deckelebene x/y, die in Figur 1 durch zwei Pfeile, welche diese Ebene aufspannen, angedeutet ist. Der Schalenrand 5 der Schale 1 setzt sich in eine Auskragung 6 fort, die die aus Materialersparnisgründen dünnwandig ausgebildete Schale 1 an ihrem oben umlaufenden Rand stabilisiert.

Die Schale 1 weist im vorliegenden Ausführungsbeispiel eine rechteckige Grundform auf, mit zwei Seitenwänden 7 und zwei Stirnwänden 8. Der Deckel 2 ist insofern ebenfalls mit einer rechteckigen Grundform versehen. Er teilt sich auf in einen Deckelrand 9 und einen Innenbereich 10, und er ist in Zwei-Komponenten-Spritzgusstechnik gefertigt: Eine erste Komponente, die den Deckelrand 9 bildet, besteht aus durchgefärbtem Kunststoff, wohingegen ein Innenbereich 10 des Deckels 2 aus transparentem Kunststoff gefertigt ist. Dies ermöglicht, auch die Schale 1 aus durchgefärbtem Kunststoff zu fertigen und gleichwohl den Inhalt der Frischhaltedose von außen einsehen zu können.

Der Schieberahmen 3 ist, wie anhand Figur 1 gut erkennbar ist, als geschlossener Ring ausgebildet, allerdings nur an drei Seiten, nämlich an beiden Seitenwänden 7 und an einer der beiden Stirnwände 8 mit einer Haltenut 11 ausgestattet. Diese weist an ihren beiden Enden jeweils eine Einführschräge 12 auf. Mit Hilfe dieser Einführschräge 12 ist der Schieberahmen 3 leicht so über den Deckelrand 9 und die Auskragung 6 am Schalenrand 5 aufschiebbar, dass sie durch ihr C-Profil gleichzeitig die Auskragung 6 untergreift und den Deckelrand 9 übergreift, so dass sie diese beiden Teile aneinander festhalten kann. Die direkte Haltewirkung erstreckt sich über beide Seitenwände 7 und eine der beiden Stirnwände 8 mitsamt der dazwischenliegenden Eckbereiche. Lediglich an der gegenüberliegenden Stirnwand 8, die in Figur 1 auf der linken Seite dargestellt ist, verfügt der Schieberahmen 3 nicht über eine Haltenut 11, da er ansonsten nicht auf die Frischhaltedose aufgeschoben oder von dieser abgezogen werden kann.

Stattdessen ist an der Stirnseite des Schieberahmens 3, die ohne Haltenut auskommen muss, ein als Klappe ausgebildetes Riegelelement 4 angebracht. Dieses sorgt zum einen dafür, dass der Schieberahmen 3 unverrückbar auf dem Deckel und der Schale 1 sitzt - an der gegenüberliegenden Stirnwand 8 sorgt die dort vorhandene Haltenut 11 als Anschlag dafür, dass der Schieberahmen 3 auch nicht zur anderen Seite weggezogen werden kann - und zum anderen hält das Riegelelement 4, in Entsprechung zur Haltenut 11, den Deckelrand 9 an der Auskragung 6 des Schalenrands 5 fest.

Im Kontaktbereich zwischen dem Deckelrand 9 und dem Schalenrand 5 ist ein (in Figur 1 nicht sichtbarer) Dichtungsring eingesetzt, der vom Deckelrand 9 gegen den oberen Bereich der Schale 1 gepresst wird, um dort eine Abdichtung sicherzustellen. Die entsprechende Presskraft wird vom C-Profil der Haltenut 11 aufgebracht, unterstützt durch das als Klappe ausgebildete Riegelelement 4, das an der ihm zugeordneten Stirnwand 8 den Deckel 2 gegen die elastische Rückstellkraft des Dichtungsrings gegen die Schale 1 vorspannt. Näheres ergibt sich aus den nachfolgend beschriebenen, weiteren Figuren.

Figur 2 zeigt in einer schematischen, isometrischen Darstellung die Schale 1 aus dem in Figur 1 dargestellten Ausführungsbeispiel separat. Die Seitenwände 7 und Stirnwände 8, die über einen Schalenboden 18 miteinander verbunden sind, schließen einen vom Schalenrand 5 umschriebenen Innenraum 14 ein. Am Schalenrand 5 bildet die dort angeformte Auskragung 6 eine nach oben orientierte Auflagefläche 13 für den (hier nicht dargestellten) Deckelrand 9.

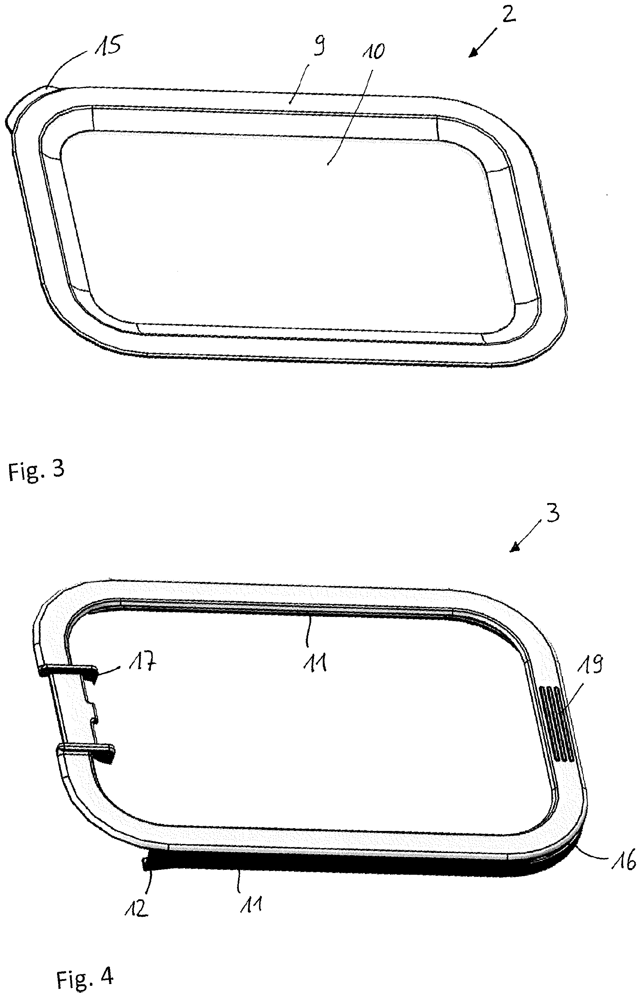

In Figur 3 ist in einer weiteren schematischen, isometrischen Darstellung der Deckel 2 des in Figur 1 dargestellten Ausführungsbeispiels gezeigt. Hier wird deutlich, dass der Deckel 2 nicht nur aus einem Deckelrand 9 und einem Innenbereich 10 besteht, sondern an einer Ecke seiner rechteckigen Grundform mit einer sich nach außen über den Deckelrand hinaus erstreckenden Grifflasche 15 ausgestattet ist, um den Deckel 2 auch dann leicht ergreifen zu können, wenn er auf der Schale 1 bzw. auf deren Schalenrand 5, genauer: auf der Auflagefläche 13 der Auskragung 6 des Schalenrands 5 aufliegt.

Die Figur 4 zeigt den Schieberahmen 3 des in Figur 1 dargestellten Ausführungsbeispiels wiederum in einer schematischen, isometrischen Darstellung. Hier wird deutlich, dass der Schieberahmen 3 einen vollständigen Ring ausbildet, der die rechteckige Grundform der Schale 1 hat. Die Haltenut 11 läuft entlang von drei Seiten dieser rechteckigen Grundform und weist an ihrem beiden Enden die Einführschrägen 12 auf. In einer Ecke der rechteckigen Grundform, über die sich die Haltenut 11 erstreckt, befindet sich ein Schlitz 16 zur Aufnahme der in Figur 3 dargestellten Grifflasche 15 des Deckels 2, so dass der Schieberahmen 3 von beiden möglichen Seiten auf die Schale 1 und den Deckel 2 aufgeschoben werden kann, unabhängig davon, auf welcher Seite sich die Grifflasche 15 befindet. Gegebenenfalls wird diese vom Schlitz 16 aufgenommen, sodass sie das Aufschieben des Schieberahmens 3 nicht behindert.

An derjenigen Seite des Schieberahmens 3, an der dieser nicht mehr mit der Haltenut 11 ausgestattet ist, ist ein Scharnier 17 angeformt, in das das als schwenkbare Klappe ausgebildete Riegelelement 4 (Figur 1) eingesetzt und schwenkbar gehalten werden kann. Das Scharnier 17 ist, wie der Rest des Schieberahmens 3 aus spritzgegossenem Kunststoff gefertigt. Drei eingeformte Stege 19 sorgen für einen erhöhten Grip beim Aufschieben oder Abziehen des Schieberahmens 3. Dies ist besonders vorteilhaft, wenn der Schieberahmen 3 beim Aufschieben, mit Unterstützung der Einführschrägen 12 an der Haltenut 11, den Deckel 2 auf die Schale 1 aufpresst, um den (hier nicht sichtbaren) Dichtungsring zu komprimieren.

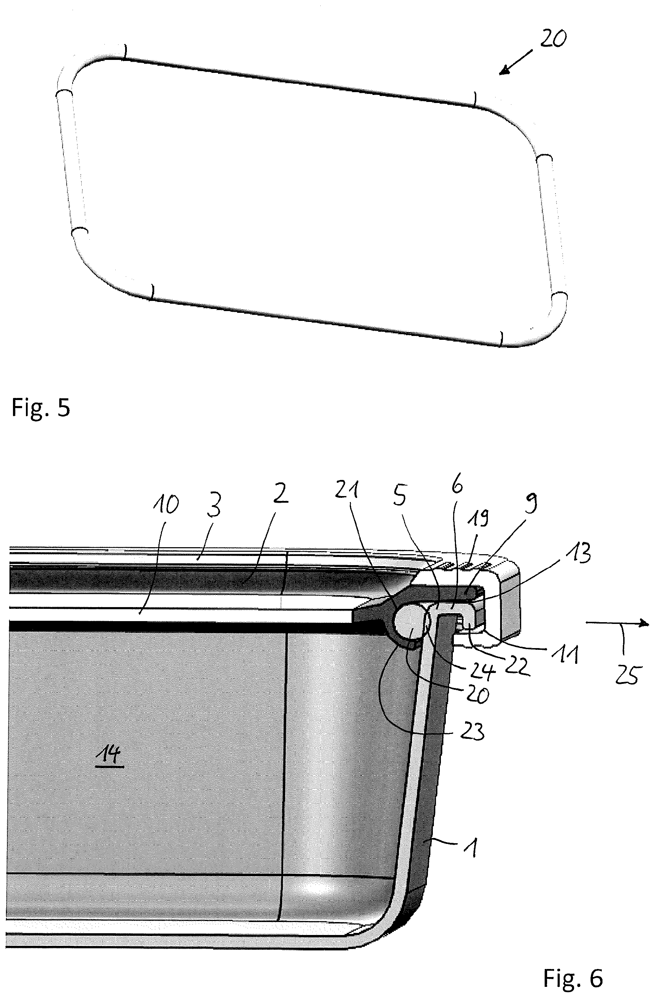

Dieser Dichtungsring 20 ist, als letztes Bauteil der in Figur 1 dargestellten Frischhaltedose, in Figur 5, wiederum in einer schematischen, isometrischen Ansicht, dargestellt. Es handelt sich um eine O-Ring-Dichtung aus weichelastischem Material, die vorzugsweise in die rechteckige Grundform vorgeformt ist.

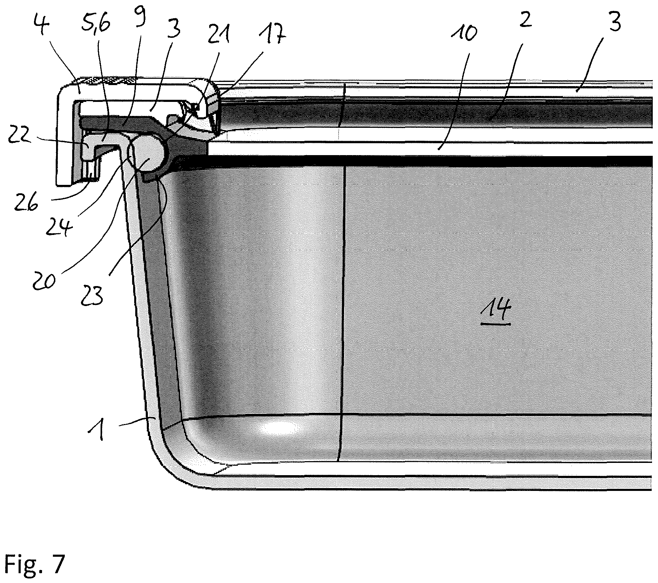

Die erfindungsgemäße Ausbildung einer Nut 21 zur Aufnahme des Dichtungsrings 20 wird anhand der Figuren 6 und 7 verdeutlicht, die jeweils eine Seite der in Figur 1 dargestellten Frischhaltedose im Längsschnitt zeigen.

In Figur 6 ist diejenige Seite der Frischhaltedose dargestellt, an der der Schieberahmen 3 durchgehend die Haltenut 11 aufweist. Diese übergreift mit ihrem C-Profil den Deckelrand 9, der auf der Auflagefläche 13 der Auskragung 6 des Schalenrands 5 aufliegt, und sie untergreift gleichzeitig eine Abkantung 22 der Auskragung 6, sodass der Deckel 2 und die Schale 1 fest und sicher zusammengehalten werden.

Unterhalb des Deckelrands 9 ist eine sich nach unten in den Innenraum 14 der Schale hinein erstreckende Nutwand 23 angeformt, die zusammen mit dem Deckelrand 9 die Nut 21 ausbildet, welche den Dichtungsring 20 aufnimmt. Dieser ist, wie anhand Figur 6 (und Figur 7) erkennbar, hierdurch so angeordnet, dass er bei aufgesetztem Deckel 2 gegen die Innenseite des Bereichs des oberen Schalenrands 5 drückt und so einen Kontaktbereich 24 zwischen dem Deckel 2 und der Schale 1 abdichtet.

Die erfindungsgemäße Besonderheit besteht nun darin, dass die Nut 21 sich horizontal öffnet, also in eine Richtung, die vom Innenbereich 10 des Deckels 2 abgewandt ist und im Wesentlichen in der Deckelebene x-y bzw. in einer zu dieser parallelen Ebene liegt. Diese Richtung ist mit dem Pfeil 25 angedeutet.

Die Figur 7 zeigt die andere Hälfte der in Figur 1 dargestellten Frischhaltedose in derselben längsgeschnittenen Ansicht wie Figur 6. An dieser Stelle ist der Schieberahmen 3 nicht mehr mit der Haltenut 11 versehen. Stattdessen ist das Riegelelement 4 sichtbar, das im Scharnier 17 des Schieberahmen 3 schwenkbar gelagert ist und mittels einer Rastnase 26, die die Abkantung 22 der Auskragung 6 des Schalenrands 5 einrastend hintergreift, an der Schale 1 festgelegt, wobei sie mit dazu beiträgt, dass der Schieberahmen 3 den Deckelrand 9 nach unten gegen die Schale 1 drückt und so die Komprimierung des Dichtungsrings 20 aufrechterhält.

In den Figuren 6 und 7 wird nachvollziehbar verdeutlicht, dass die Nut 21 zur Aufnahme des Dichtungsrings 20, weil sie sich in der horizontal verlaufenden Deckelebene x-y öffnet, ein sehr leichtes Einlegen des Dichtungsrings 20 in die Nut 21 (bei abgenommenem Deckel 2) ermöglicht. Denn wenn der Dichtungsring 20 auf einer Seite des Deckels 2 in die Nut 21 eingelegt wird, kann er leicht gestreckt werden, um ihn auch auf der anderen Seite in die Nut 21 einzulegen, ohne Gefahr zu laufen, dass der Dichtungsring 20 an irgendeiner Stelle wieder aus der Nut 21 springt; denn durch das Strecken des Dichtungsrings 20 wird dieser nur noch mehr in die Nut 21 hineingezogen.

Insbesondere aufgrund des Schiebenrahmens 3 wird gleichwohl sichergestellt, dass der Deckel 2 solcherart fest auf der Schale 1 bzw. dem Schalenrand 5 sitzt, dass der Dichtungsring 20 zwischen der Nut 21 und der Innenseite des Schalenrands 5 (im Kontaktbereich 24) komprimiert wird und dies auch bleibt, sodass sich eine zuverlässige Dichtung zwischen dem Deckel 2 und der Schale 1 ergibt.

### Bezugszeichenliste

- 1.: Schale
- 2.: Deckel
- 3.: Schieberahmen
- 4.: Riegelelement
- 5.: Schalenrand
- 6.: Auskragung
- 7.: Seitenwand (von 1)
- 8.: Stirnwand (von 1)
- 9.: Deckelrand
- 10.: Innenbereich (von 2)
- 11.: Haltenut
- 12.: Einführschräge
- 13.: Auflagefläche
- 14.: Innenraum (von 1)
- 15.: Grifflasche
- 16.: Schlitz
- 17.: Scharnier
- 18.: Schalenboden
- 19.: Stege
- 20.: Dichtungsring
- 21.: Nut
- 22.: Abkantung
- 23.: Nutwand
- 24.: Kontaktbereich
- 25.: Richtung
- 26.: Rastnase

## Patentansprüche

1. Frischhaltedose mit abnehmbarem Deckel (2), umfassend eine Schale (1) mit einem oben umlaufenden, eine horizontale Deckelebene (x/y) definierenden Schalenrand (5), einen Deckel (2), der abnehmbar auf der Schale (1) sitzt und hierzu mit einem Deckelrand (9) direkt oder indirekt umlaufend auf dem Schalenrand (5) aufliegt, sowie einen weichelastischen Dichtungsring (20), der den aufgesetzten Deckel (2) m Bereich des Schalenrandes (5) gegen einen Innenraum (14) der Schale (1) abdichtet, wobei der Deckel (2) eine umlaufende Nut (21) zur Aufnahme des Dichtungsrings (20) aufweist, die im Bereich eines Außenumfangs des Deckels (2) angeordnet ist,
**dadurch gekennzeichnet,**
**dass** die Nut (21) zur Aufnahme des Dichtungsrings (20) zwischen dem Deckel (2) im Bereich des Deckelrands (9) und einer sich vom Deckel (2) im Bereich des Deckelrands (9) nach unten in den Innenraum (14) der Schale (1) erstreckenden Nutwand (23) gebildet ist, wobei sich die Nut (21) in Richtungen öffnet, die von einem Innenbereich (10) des Deckels (2) abgewandt sind und im Wesentlichen in der Deckelebene (x/y) oder einer zu dieser parallelen Ebene liegen.

2. Frischhaltedose nach Anspruch 1,
wobei die Nut (21) zur Aufnahme des Dichtungsrings (20) als Rundnut und der Dichtungsring (20) als O-Ring ausgeformt sind.

3. Frischhaltedose nach einem der Ansprüche 1 oder 2,
wobei der Schalenrand (5) mit einer Auskragung (6) versehen ist.

4. Frischhaltedose nach Anspruch 3,
wobei die Auskragung (6) oberseitig eine Auflagefläche (13) für den Deckelrand (9) bildet.

5. Frischhaltedose nach Anspruch 4,
wobei die Auskragung (6) in ihrem äußeren Endbereich eine Abkantung (22) zur Stabilisierung aufweist.

6. Frischhaltedose nach einem der Ansprüche 3 bis 5,
wobei ein Schieberahmen (3) zum horizontalen Aufschieben auf den Deckelrand (9) vorhanden ist, und der Schieberahmen (3) zumindest an zwei gegenüberliegenden Seiten der Frischhaltedose eine Haltenut (11) ausbildet, die im Querschnitt C-förmig ausgebildet ist und zum gleichzeitigen Übergreifen des Deckelrands (9) und Untergreifen der Auskragung (6) am Schalenrand (5) vorgesehen ist, um den Deckelrand (9) auf dem Schalenrand (5) zu halten.

7. Frischhaltedose nach Anspruch 6,
wobei die Haltenut (11) im Schieberahmen (3) mit Einführschrägen (12) zum gleichzeitigen Einfädeln von Deckelrand (9) und Auskragung (6) versehen und hinter diesen Einführschrägen (12) solcherart geformt ist, dass sie den mit Dichtungsring (20) auf die Schale (1) aufgesetzten Deckel (2) gegen eine elastische Rückstellkraft des Dichtungsrings (20) auf die Schale (1) aufpresst.

8. Frischhaltedose nach einem der Ansprüche 6 oder 7,
wobei die Schale (1) eine rechteckige Grundform aufweist, der Deckel (2) an einer Ecke der rechteckigen Grundform mit einer über die Auskragung (6) des Schalenrandes (5) überstehenden Grifflasche (15) versehen ist und der Schieberahmen (3) ebenfalls eine rechteckige Grundform aufweist, wobei der Schieberahmen (3) in mindestens einer Ecke mit einem Schlitz (16) zur Aufnahme der Grifflasche (15) versehen ist.

9. Frischhaltedose nach Anspruch 8,
wobei sich die Haltenut (11) über drei Seiten der rechteckigen Grundform des Schieberahmens (3) erstreckt.

10. Frischhaltedose nach einem der Ansprüche 6 bis 9,
wobei der Schieberahmen (3) einen vollständigen Ring bildet, mit einem Anschlag, der eine Aufschiebebewegung des Schieberahmens (3) auf den Deckelrand (9) begrenzt und durch die Haltenut (11) gebildet sein kann, und mit einem dem Anschlag im Wesentlichen gegenüber liegenden Riegelelement (4) zum Verriegeln des Schieberahmens (3) in seiner aufgeschobenen Stellung.

11. Frischhaltedose nach Anspruch 10,
wobei das Riegelelement (4) eine Klappe ist, die schwenkbar am Schieberahmen (3) befestigt ist und an oder unter der Auskragung (6) am Schalenrand (5) eingerastet werden kann.

12. Frischhaltedose nach mindestens einem der Ansprüche 1 bis 11,
wobei im Deckel (2) ein Ventil zum Ausgleich eines Überdrucks im Innenraum (14) der Schale (1) angeordnet ist.

13. Frischhaltedose nach den Ansprüchen 11 und 12,
wobei das Ventil unterhalb der Klappe angeordnet und das Ventil durch die Klappe verschließbar ist.

14. Frischhaltedose nach mindestens einem der Ansprüche 1 bis 13,
bestehend aus spritzgegossenem Kunststoff.

15. Frischhaltedose nach Anspruch 14,
wobei der Deckel (2) solcherart in Zwei-Komponenten-Spritzgusstechnik hergestellt ist, dass zumindest der Deckelrand (9) aus einem durchgefärbten Kunststoff besteht, während der Innenbereich (10) des Deckels (2) aus einem transparenten und/oder transluzenten und/oder opaken Kunststoff gefertigt ist.
